# EUROPEAN PATENT SPECIFICATION

(11) **EP 3 802 623 B1**
(45) Date of publication and mention of the grant of the patent: **02.03.2022**
(21) Application number: 19732479.1
(22) Date of filing: 05.06.2019
(51) Int. Cl.: C08B 37/00

(54) **SYNTHESIS OF A HIGHLY BIOCOMPATIBLE, INJECTABLE GEL (FILLER) MADE FROM CROSS-LINKED, MONOPHASIC SODIUM HYALURONATE AND LINEAR, INTERCALATED, MULTIFRACTIONAL SODIUM HYALURONATE**
SYNTHESE EINES HOCH BIOKOMPATIBLEN, INJIZIERBAREN GELS (FÜLLSTOFFS) AUS VERNETZTEM, MONOPHASISCHEM NATRIUMHYALURONAT UND LINEAREM, INTERKALIERTEM, MULTIFRAKTIONELLEM NATRIUMHYALURONAT
SYNTHESE D'UN GEL INJECTABLE HAUTEMENT BIOCOMPATIBLE FABRIQUÉ À PARTIR D'HYALURONATE DE SODIUM MONOPHASIQUE RÉTICULÉ ET DE HYALURONATE DE SODIUM MULTIFRACTIONNEL LINÉAIRE ET INTERCALÉ

(30) Priority: 07.06.2018 IT 201800006127
(43) Date of publication of application: 14.04.2021
(73) Proprietor: Regenyal Laboratories S.r.l., 63074 S. Benedetto del Tronto (AP) (IT)
(72) Inventor: ZAZZETTA, Marco, 63074 San Benedetto del Tronto (AP) (IT)
(74) Representative: Primiceri, Maria Vittoria
(86) International application number: PCT/IB2019/054687
(87) International publication number: WO 2019/234660

(56) References cited:
- WO-A1-00/46253
- US-A- 5 571 907
- HAMED OTHMAN A ET AL: "New routes to prepare superabsorbent polymers free of acrylate cross-linker", IRANIAN POLYMER JOURNAL, IRAN POLYMER AND PETROCHEMICAL INSTITUTE, IR, vol. 24, no. 10, 30 August 2015 (2015-08-30), pages 849-859, XP035543326, ISSN: 1026-1265, DOI: 10.1007/S13726-015-0373-9 [retrieved on 2015-08-30]
- NIEDERMANN P ET AL: "Characterization of high glass transition temperature sugar-based epoxy resin composites with jute and carbon fibre reinforcement", COMPOSITES SCIENCE AND TECHNOLOGY, ELSEVIER, AMSTERDAM, NL, vol. 117, 6 June 2015 (2015-06-06), pages 62-68, XP029271666, ISSN: 0266-3538, DOI: 10.1016/J.COMPSCITECH.2015.06.001
- TOMIHATA K ET AL: "Preparation of cross-linked hyaluronic acid films of low water content", BIOMATERIALS, ELSEVIER SCIENCE PUBLISHERS BV., BARKING, GB, vol. 18, no. 3, 1 February 1997 (1997-02-01), pages 189-195, XP004015286, ISSN: 0142-9612, DOI: 10.1016/S0142-9612(96)00116-0

## Description

### Field of the Invention

The present invention relates to the field of cosmetic medicine, and more specifically to the synthesis of an injectable, monophasic gel (filler) for the medical-cosmetic treatment of wrinkles and facial volumes, made from cross-linked, monophasic sodium hyaluronate (NaHA) and linear, intercalated, multifractional sodium hyaluronate (NaHA).

### Background of the invention

Currently in the fields of cosmetic medicine, orthopaedics and ophthalmology a plurality of syntheses are known of, used respectively to correct wrinkles, to add volume to the face, for joint viscosupplementation and as viscoelastic agents in ophthalmic surgery, without however any of these syntheses envisaging the association of sodium hyaluronate (NaHA), cross-linked with the cross-linking agent epoxy-allyl-sucrose (EAS), and the intercalation of linear, multifractional sodium hyaluronate (NaHA).

Hyaluronic acid (HA) is a polysaccharide consisting of chains of thousands of saccharide units composed of residues of glucuronic acid and N-acetylglucosamine. Hyaluronic acid (HA) is one of the basic components of human connective tissues. Sodium hyaluronate (NaHA) is the sodium salt of hyaluronic acid. By virtue of its greater stability and easier processing compared to hyaluronic acid, sodium hyaluronate (NaHA) is normally used in the production of injectable products (fillers) used in the field of cosmetic medicine.

Injectable products (fillers) for the medical-cosmetic treatment of wrinkles and facial volumes are aimed at performing a filling action, that is to correct the imperfections of the face in order to give it a younger appearance.

The injectable products made with the syntheses known in the state of the art may be monophasic or biphasic, resorbable or permanent. All the sodium hyaluronate-based injectable products known in the state of the art have an intrinsic toxicity deriving from the materials used as cross-linking agents in order to prolong the permanence of the product in the tissues.

A monophasic, injectable filler is understood to mean a homogeneous gel consisting of a single fluid physical phase, of a gelatinous nature, in which the two solid and fluid phases cannot be distinguished, as happens in the case of injectable biphasic fillers.

Intercalated, linear, multifractional sodium hyaluronate is understood to mean a sodium hyaluronate in which the various molecular fractions, with different molecular weight, retain their native polymeric characteristics, not being cross-linked, but merely trapped in the links of the polymerisation lattice of the cross-linked, monophasic, sodium hyaluronate. The sodium hyaluronate fractions of different molecular weight are slowly released over time, each performing a specific action. The various molecular fractions of sodium hyaluronate are obtained by means of a fragmentation process already known in the scientific literature. This process uses specifically heat and ultrasound in strongly alkaline pH conditions, starting from the 1 million Dalton fraction to obtain fractions of different molecular weight, each of which characterized by a specific targeted function.

In the state of the art, the document WO2004092222 A2 discloses a method for cross-linking polysaccharides with low and high molecular weight in an aqueous medium, through the use of a cross-linking agent, in order to obtain an injectable filler consisting of a monophasic hydrogel made from polysaccharides and derivatives thereof. WO2004092222 A2 discloses the use of an effective, but not excessive, amount of a cross-linking agent, in order to promote the cross-linking process of polysaccharides and improve the resistance to degradation of the injectable filler, increasing the time period in which the filler maintains its characteristics intact after application. In particular, the document WO2004092222 A2 claims a method for the polymerization of a mixture consisting of two fractions, one with a low molecular weight and the other with a high molecular weight, of a polysaccharide represented by a hyaluronic acid salt, such as potassium hyaluronate (KHA) or more preferably sodium hyaluronate (NaHA). WO2004092222 A2 claims the use of various cross-linking agents, among which epichlorohydrin, divinyl sulfone, various aldehydes, such as formaldehyde, glutaraldehyde, crotonaldehyde and various epoxides such as 1,2-bis(2,3 -epoxypropoxy) ethylene, 1-(2,3 epoxypropyl)-2,3-epoxycyclohexane and 1,4-bis(2,3-epoxypropoxy)butane, or 1,4-butanediol diglycidyl ether (BDDE), considered the best cross-linking agent among those claimed.

Moreover, in the state of the art the document WO0206350 A1 discloses a method for cross-linking polysaccharides and their derivatives in order to produce injectable hydrogels and gels for cosmetic surgery, using a polyfunctional cross-linking agent which reacts with the polysaccharide in solid phase, during its hydration in an alkaline environment. In particular, the document WO0206350 A1 discloses a method for cross-linking polysaccharides and their derivatives, where the polysaccharide used is the sodium salt of hyaluronic acid (NaHA sodium hyaluronate) and the polyfunctional cross-linking agent may be an epoxide such as 1,4-bis(2,3-epoxypropoxy) butane or 1,2-bis(2,3-epoxypropoxy) ethylene or 1-(2,3-epoxypropyl)-2,3-epoxycyclohexane, or preferably 1,4-butanediol diglycidyl ether (BDDE), considered the best cross-linking agent among those indicated, to promote the cross-linking process of the sodium hyaluronate during the hydration of the solid phase, in an alkaline environment at pH between 10 and 12.

In the state of the art the document US7385052 B2 is also known, which discloses a method for the cross-linking of hyaluronic acid (HA) and its derivatives, where the cross-linking mechanism is multifunctional in that it provides for the formation of two or more types of links originating from the reaction of various cross-linking agents, used simultaneously or sequentially, mainly with the hydroxyl functional groups and the carboxylic functional groups of hyaluronic acid and its derivatives. In particular, document US7385052 B2 discloses a method for the cross-linking of hyaluronic acid (HA) and its derivatives where the hydroxyl functional groups may originate "ether" type cross-linking bonds and the carboxylic functional groups "ester" type cross-linking bonds. The document US7385052 B2 discloses a method for the cross-linking of hyaluronic acid (HA) and its derivatives where the hyaluronic acid (HA) can be chemically modified to form other functional groups, for example of the amine type, which can originate cross-linking bonds of the "amide" type, or of the "imine" or "amine" type. Depending on the type of functional group involved in the cross-linking process and the type of cross-linking bond to be formed, different types of cross-linking agents are used simultaneously or in sequence. In particular, document US7385052 B2 provides for the use of cross-linking agents known in the state of the art, such as glutaraldehyde, crotonaldehyde, epichlorohydrin, divinyl sulfone and various epoxides, among which 1,4-butanediol diglycidyl ether (BDDE). The US document 2007/0196426 A1 which discloses a method for the production of a biocompatible, cross-linked gel characterized by being simultaneously monophasic, polydensified, cohesive, injectable and with a long permanence at the injection site, is also known. The method claimed in document US 2007/0196426 A1 provides that a given quantity of a cross-linking agent is added to a given amount of biocompatible polymer in aqueous solution and that an additional amount of polymer having a molecular weight greater than 500,000 Da is added to the resulting solution, in order to decrease the concentration of polymer in solution and block the cross-linking reaction, consuming all the cross-linking agent present. The method claimed in US 2007/0196426 A1 can be applied to polymers naturally present in the human body, such as for example hyaluronic acid (HA) and others, or to polymers of natural origin, but not naturally present in the human body, such as for example, cellulose and its derivatives. The method claimed in the document US 2007/0196426 A1 envisages the use of cross-linking agents, known in the state of the art, consisting of bifunctional or polyfunctional molecules, preferably epoxy, such as for example 1,4-butanediol diglycidyl ether (BDDE).

Lastly, the document US 2014/0011990 A1 disclosing a method for cross-linking polysaccharides and their derivatives in order to obtain a monophasic, injectable gel, characterized in that the cross-linking process is carried out in a mixture containing a high molecular weight polysaccharide, between 1,000,000 Da and 3,000,000 Da and a low molecular weight polysaccharide of 300,000 Da, is known in the state of the art. The method for cross-linking polysaccharides and their derivatives claimed in document US 2014/0011990 A1 provides that the characteristics of homogeneity, viscosity and persistence at the injection site of the monophasic, injectable gel are determined and obtained by a specific concentration ratio between the two high and low molecular weight polysaccharides, in combination with an effective but not excessive amount of a cross-linking agent and that the specific concentration ratio between the two polymers may vary according to the nature of the polysaccharides used. The method claimed in document US 2014/0011990 A1 can be applied to polymers naturally present in the human body, such as hyaluronic acid (HA) and its salts, or to polymers of natural origin, but not naturally present in the human body, such as for example, cellulose, or to synthetic derivatives of natural polysaccharides, such as carboxy celluloses, such as carboxy-methyl cellulose and alkyl celluloses, such as hydroxy-ethyl cellulose and hydroxy-propyl-methyl cellulose (HPMC). In particular, the method claimed in document US 2014/0011990 A1 consists in the cross-linking of a mixture with a specific concentration ratio between two polysaccharides of the same type with high and low molecular weight, consisting of sodium (NaHA) or potassium salts (KHA) of hyaluronic acid (HA).

The method claimed in document US 2014/0011990 A1 claims the use of cross-linking agents, known in the state of the art, consisting of bifunctional or polyfunctional molecules, preferably epoxy, and in particular 1,4-butanediol diglycidyl ether (BDDE).

### Disclosure of the invention

The purpose of the present invention is the synthesis of an injectable, monophasic gel (filler) made from monophasic, cross-linked sodium hyaluronate (NaHA) and linear, intercalated, multifractional sodium hyaluronate (NaHA) for the medical-cosmetic treatment of wrinkles and facial volumes, for joint viscosupplementation and as a viscoelastic agent in ophthalmic surgery.

Another purpose of the present invention is the synthesis of an injectable, monophasic gel characterized by a greater biocompatibility compared to the fillers currently on the market.

Another purpose of the present invention is the synthesis of an injectable, monophasic gel characterized by a longer permanence at the injection site than the fillers currently on the market.

Another object of the present invention is the synthesis of an injectable, monophasic gel characterized in that the degradation of the gel does not produce the release of non-biocompatible secondary products which may cause sensitization effects at the injection site.

Another purpose of the present invention is the synthesis of an injectable, monophasic gel characterized in that the cross-linking of sodium hyaluronate is carried out with a cross-linking agent different from those known in the state of the art, the use of which makes it possible to reduce, compared to the fillers currently on the market, the quantity of cross-linking agent needed to obtain the right degree of cross-linking and, consequently, the correct viscosity of use. Another purpose of the present invention is the synthesis of an injectable, monophasic gel characterized in that the cross-linking of sodium hyaluronate is carried out with a cross-linking agent different from those known in the state of the art, the use of which makes it possible to reduce reaction time and temperature, promoting the preservation of the polymeric characteristics of the starting multifractions of the linear, intercalated sodium hyaluronate which tends to depolymerize during the cross-linking reaction in a strongly alkaline environment.

Another purpose of the present invention is the synthesis of an injectable, monophasic gel characterized in that the intercalation of linear sodium hyaluronate multifractions at different molecular weight in the polymerization lattice promotes its preservation over time and, through a gradual release of the same, promotes a regenerating effect of the tissues at the injection site. These and other purposes are achieved by the present invention which relates to the synthesis of an injectable, monophasic gel (filler) made from monophasic, cross-linked sodium hyaluronate (NaHA) and linear, intercalated, multifractional sodium hyaluronate (NaHA) used for the medical-cosmetic treatment of wrinkles and facial volumes, for joint viscosupplementation and as a viscoelastic agent in ophthalmic surgery.

### Detailed description of the invention

According to a preferred - but not limiting - embodiment, the present invention relates to the synthesis of an injectable, monophasic gel (Filler) made from monophasic, cross-linked sodium hyaluronate (NaHA) and linear, intercalated, multifractional sodium hyaluronate (NaHA), using epoxy allyl sucrose (EAS) or other epoxy sucrose derivatives as cross-linking agent, or epoxides derived from other sugars such as sorbitol and maltitol.

Said synthesis comprises the following components:
- sodium hyaluronate (NaHA) with a total concentration in the final synthesis product ranging from 1.01% to 12%, preferably 2.5%. Sodium hyaluronate is the main component of the synthesis with the dual function of chemically binding to the cross-linking agent to form a cross-linked cohesive gel with a filler and hygroscopic action and to act both as an antioxidant and moisturising agent, in its linear, intercalated fraction with higher molecular weight, and as a receptor stimulant of cells in its linear, intercalated fraction with lower molecular weight;
- epoxy allyl sucrose (EAS) with a total concentration in the final synthesis product ranging from 1% to 30%, preferably between 3% and 8% depending on the desired viscosity. The epoxy-allyl sucrose acts as the cross-linking agent of hyaluronic acid molecules and its action may be performed, in an equivalent manner, also by other epoxides derived from sucrose, such as epoxy crotyl sucrose (ECS), or from epoxides derived from other sugars such as sorbitol and maltitol;
- NaOH in 0.25 molar aqueous solution with the function of creating an alkaline environment enabling the activation of the hydroxyl groups, thus favouring the cross-linking process of sodium hyaluronate;
- phosphate buffer with pH 7.4 for keeping the pH stable;
- sodium chloride as an osmotic balancer;
- water for injections, as a diluent and a solubilisation medium of the components.

The synthesis which the present patent application relates to consists of the steps described below, according to which the components are added in sequence, in the quantities established above, until the final overall mass desired is obtained.
Step 1. Mixing of sodium hyaluronate (NaHA) with an intrinsic viscosity of between 10 and 30 dl / g and an aqueous solution of epoxy allyl sucrose and 0.25-molar NaOH in a mixer set at 10 rpm, at a temperature between 15 °C and 25° C and for a time of + - 10 hours,
Step 2. Acidification of the solution to interrupt the cross-linking process and
Step 3. Dialysis purification of the resulting solution characterized by a concentration of monophasic, cross-linked sodium hyaluronate between 1% and 10% and by an osmolarity of about 200-400 mosm.
Step 4. PH stabilization with pH 7.4 buffer.
Step 5. Multifractional, sodium hyaluronate intercalation through addition to the cross-linked sodium hyaluronate solution of a gelatinous solution, prepared separately and containing No. 5 sodium hyaluronate fractions with molecular weight respectively of 1,000,000 Da, 500,000 Da, 200,000 Da, 100,000 Da and 2,000 Da, in quantities between 1% and 20% of the weight of cross-linked sodium hyaluronate. The 5 fractions of the linear, intercalated, sodium hyaluronate (NaHA) are specially characterized by the molecular weights indicated, so as to give the injectable gel which the present patent application relates to the specific characteristics that make it usable, as well as for the medical-cosmetic treatment of wrinkles and facial volumes, also in other areas, such as in the joints, for viscosupplementation and in the eye, as viscoelastic. In particular, the 1,000,000 dalton fraction has a mainly moisturising and antioxidant action, the fractions of 500,000, 200,000 and 100,000 daltons mainly perform a restructuring action, as they stimulate the fibroblasts to produce endogenous fibres, the oligomeric fraction of 2,000 dalton has a mainly stimulating action on endothelial cells, improving microcirculation.

The intercalation process, carried out in Step 4 of the synthesis process, consists of alternating thin layers of linear, multifractional sodium hyaluronate, about 2 mm thick, with thicker layers of cross-linked sodium hyaluronate, about 4 mm thick, inside special graduated containers. The preparation deriving from this operation of alternating the two types of sodium hyaluronate inside suitable graduated containers is allowed to stand for 12 hours at a temperature of 3 °C and in conditions of complete absence of oxygen. This step allows the formation of weak bonds, of the hydrogen and Van Der Waals type, between the linear fractions of the sodium hyaluronate and the cross-linked component. After 12 hours, a slow mixing of the preparation is performed in an orbital mixer fitted with special blades designed specifically for this purpose. After 3 hours of mixing, particulate micro-aggregates of cross-linked sodium hyaluronate with linear, intercalated, multifractional sodium hyaluronate are obtained as the final product. The intercalation process described makes it possible to obtain a more homogeneous distribution of the linear fractions of the multifractional sodium hyaluronate within the monophasic, cross-linked sodium hyaluronate gel with respect to that which would be obtained from a traditional mixing process, in which the addition of the linear, multifractional sodium hyaluronate is carried out at the end of the process, with a gradual mixing in standard mixers. The intercalation process described, and that is an integral part of the synthesis which the present patent application relates to, has been realized precisely to optimize the homogeneity of distribution of the linear, multifractional sodium hyaluronate in the monophasic gel which, given its high viscosity, would not permit an acceptable homogeneity of distribution within it of the linear, multifractional sodium hyaluronate if the mixing were carried out with the methodology and the equipment traditionally known in the state of the art. Thanks to the intercalation process described, and that is an integral part of the synthesis which the present patent application relates to, the linear, intercalated fractions of sodium hyaluronate are more effectively protected from enzymatic degradation, maintaining their native characteristics unchanged and can be released at the injection site in a slower and more gradual manner during the degradation of the cross-linked portion, with the final effect of a more effective biostimulation for the regeneration of tissue through interaction with cell receptors.

The documents, known to the state of the art, referred to in the present patent application disclose methods for the polymerization of polysaccharides and in particular of hyaluronic acid and its sodium and potassium salts.

The document WO2004092222 in particular claims a method for the polymerization of a mixture consisting of two fractions, one with a low molecular weight and the other with a high molecular weight, of a polysaccharide represented by a hyaluronic acid salt, such as potassium hyaluronate (KHA) or more preferably sodium hyaluronate (NaHA).

The document WO0206350 A1 in particular claims a method for cross-linking polysaccharides and their derivatives, where the polysaccharide used is the sodium salt of hyaluronic acid (NaHA sodium hyaluronate).

The document US7385052 B2 in particular claims a method for the cross-linking of hyaluronic acid (HA) and its derivatives where the cross-linking mechanism is multifunctional in that it provides for the formation of two or more types of links originating from the reaction of various cross-linking agents, used simultaneously or sequentially, mainly with the hydroxyl functional groups and the carboxylic functional groups of hyaluronic acid and its derivatives.

US 2007/0196426 A1 in particular claims a method for the production of a biocompatible cross-linked gel characterized by being simultaneously monophasic, polydensified, cohesive, injectable and with a long permanence at the injection site and can be applied to polymers naturally present in the human body, such as hyaluronic acid (HA) and others, or to polymers of natural origin, but not naturally present in the human body, such as cellulose and its derivatives.

The document US 2014/0011990 A1 in particular claims a method for the cross-linking of polysaccharides and their derivatives in order to obtain an injectable, monophasic gel which consists in the cross-linking of a mixture of two polysaccharides with high and low molecular weight, characterised by a specific concentration ratio between the two and in that the two polysaccharides are of the same type and consist of sodium (NaHA) or potassium salts (KHA) of hyaluronic acid (HA).

None of the aforementioned documents claims a method for the synthesis of an injectable, monophasic gel consisting of the intercalation of linear multifractions of sodium hyaluronate (NaHA) with a specific molecular weight, in the polymerization lattice of the monophasic sodium hyaluronate (NaHA), with the result of obtaining a gel characterized by a greater and more effective biological regenerating activity of tissue and by a longer permanence in the injection site.

In the documents WO2004092222 A2, WO0206350 A1, US7385052 B2, US 2014/0011990 A1 the use of cross-linking agents known in the state of the art and in particular of 1,4-butanediol diglycidyl ether (BDDE) is claimed. None of the documents mentioned above claims the use, as a cross-linking agent, of epoxy allyl sucrose (EAS), or of epoxy crotyl sucrose (ECS) or other epoxides derived from other sugars other than sucrose, such as sorbitol and maltitol. Cross-linking performed using epoxy allyl sucrose (EAS) or epoxy crotyl sucrose (ECS), or other epoxides derived from sugars other than sucrose, significantly increases the biocompatibility of the injectable gel at the injection site. The use of epoxy allyl sucrose (EAS), or epoxy crotyl sucrose (ECS), or other epoxides derived from sugars other than sucrose, significantly increases the biotolerability of the injectable gel compared to that of a traditional gel where cross-linking agents already known in the prior art are used, and in particular 1,4-butanediol diglycidyl ether (BDDE). The injectable gel obtained from the synthesis which the present patent application relates to is characterized by a greater biocompatibility and biotolerability compared to the injectable gels of the state of the art. From the degradation of the injectable gel obtained from the synthesis which the present patent application relates to, secondary products consisting of allyl and sucrose, highly biocompatible and biotolerable, are developed, whereas in the case of degradation of injectable gels cross-linked with 1,4-butanediol diglycidyl ether (BDDE) secondary products are developed which are harmful to health and not biocompatible, such as the psychotropic agent 1,4 butanediol.

The danger of 1,4-butanediol diglycidyl ether (BDDE) is known, as shown by various documents, including the Cancer Risk Assessment P020023, relative to an injectable gel, known in the state of the art and in common use, in which it is reported that 1,4-butanediol diglycidyl ether (BDDE) has shown mutagenic effects that may be associated with the onset of tumours at the injection site. Various documents, among which the article "Use of Sucrose-based Epoxy Formulations and Cellulosic Fibers in the Design, preparation and Screening of New Composite Insulation Materials" by Sachinvala, Winsor, Parikh, Solhjoo, Parks, Vigo, Blanchard, Bertoniere and the PhD thesis in Engineering of Materials and Structures of the University of Naples Federico II, "Sintesi e caratterizzazione strutturale, viscolestica e meccanica di bioresineepossidiche multifunzionali reticolate con poliammine" ["Synthesis and structural, viscoelastic and mechanical characterization of multifunctional epoxides bioresins cross-linked with polyamines"] report the non-cytotoxicity and non-mutagenicity of epoxy allyl sucrose (EAS) and epoxy crotyl sucrose (ECS). The use of epoxy allyl sucrose (EAS) or epoxy crotyl sucrose (ECS) enables the same degree of cross-linking of the gel to be obtained, and therefore the same viscosity, with a concentration of cross-linking agent lower than that used in injectable gels known in the state of the art, where the cross-linking agent is 1,4-butanediol diglycidyl ether (BDDE). This is due to the fact that epoxy allyl sucrose (EAS) contains 3 epoxy functional groups in its structure, while 1,4-butanediol diglycidyl ether (BDDE) contains only 2. Using a lower concentration of cross-linking agent increases the biocompatibility and biotolerability of the injectable gel.

The synthesis which the present patent application relates to is a "basic solution" aimed preferably at filling and correcting skin imperfections, also in combination with specific medical devices and in varying concentrations depending on the sector of use.

The objectives of application of the injectable, monophasic gel obtained from the synthesis which the present patent application relates to, are mainly directed at:
- the "Face" for the restoration or increase in volume of the cheekbones, lips, facial depressions, in order to achieve the right volumetric balance;
- "Wrinkles and folds or scars" in order to obtain the filling of these and therefore a more youthful and pleasant appearance;
- the "Body" in order to fill in depressions of various origins such as scars or stretch marks or for the localized volumetric increase of breasts or other anatomical zones;
- "Articulations" as a substitute for synovial fluid, performing a viscosupplementation action;
- "Male and female genitals" in order to increase volumes in case of hypotrophy and improve hydration and skin texture;
- the "Eye" as viscoelastic during ophthalmic surgery.

## Claims

1. Synthesis method of an injectable, monophasic gel made from monophasic, cross-linked sodium hyaluronate (NaHA) and linear, intercalated multifractional sodium hyaluronate (NaHA) comprising the following steps:
Step 1. mixing of sodium hyaluronate with an intrinsic viscosity of between 10 and 30 dl/g and an aqueous solution of a sucrose epoxide selected from: epoxy allyl sucrose (EAS), or epoxy crotyl sucrose (ECS) and 0.25-molar NaOH in a mixer set at 10 rpm, at a temperature between 15°C and 25°C and for a time of 10 hours;
Step 2. acidification of the solution to interrupt the cross-linking process;
Step 3. dialysis purification of the resulting solution **characterized by** a concentration of monophasic, cross-linked sodium hyaluronate between 1% and 10% and an osmolarity of about 200-400 mosm;
Step 4. pH stabilization with pH 7.4 buffer;
Step 5. intercalation of multifractional sodium hyaluronate through addition to the cross-linked sodium hyaluronate solution of a gelatinous solution prepared separately and containing No. 5 sodium hyaluronate fractions with molecular weight respectively of 1,000,000 Da, 500,000 Da, 200,000 Da, 100,000 Da and 2,000 Da, in quantities between 1% and 20% of the weight of cross-linked sodium hyaluronate (NaHA).

2. Synthesis method according to claim 1 wherein the sucrose epoxide is substituted by the epoxide of a sugar selected from maltitol and sorbitol.

3. Synthesis method according to claims 1-2 wherein the intercalation process of the linear, multifractional sodium hyaluronate consists of alternating layers of linear, multifractional sodium hyaluronate with a thickness of 2 millimeters with layers of cross-linked sodium hyaluronate with a thickness of 4 millimeters in a graduated container.

4. Synthesis method according to any one of claims 1-3 wherein the preparation deriving from the intercalation process:
- is left to stand for 12 hours at a temperature of 3 °C and in conditions of total absence of oxygen;
- is mixed in an orbital mixer.

5. Injectable, monophasic gel comprising the following components:
- sodium hyaluronate (NaHA) with a total concentration in the final synthesis product ranging from 1.01% to 12% cross-linked with epoxy allyl sucrose (EAS) or epoxy crotyl sucrose (ECS) with a total concentration in the final synthesis product ranging from 1% to 30%;
- it is intercalated with linear, multifractional sodium hyaluronate (NaHA) containing N. 5 sodium hyaluronate fractions with a molecular weight of 1,000,000 Da, 500,000 Da, 200,000 Da, 100,000 Da and 2,000 Da, respectively, in quantities ranging from 1% to 20% on the weight of cross-linked sodium hyaluronate (NaHA).

6. Injectable, monophasic gel according to claim 5 which has a pH 7.4.

7. Gel according to any one of claims 5-6 for use as a medicament.

8. Gel according to claim 7 for use in ophthalmic surgery as a viscoelastic agent.

9. Gel according to claim 7 for use as a substitute for synovial fluid in the joints as a viscosuppletive agent.

10. Gel according to any one of claims 5-6 for use in the treatment of wrinkles and facial volumes and as a filling agent for wrinkles and folds or scars of a body.

11. Gel according to any one of claims 5-6 for use in restoring or increasing volumes of cheekbones, lips, facial depressions, and as a filling agent for filling depressions of various origins such as scars or stretch marks or for increasing localized volume of breasts or other anatomical areas.

12. Gel according to any one of claims 5-6 for use as a filling agent to increase the volumes of the male and female genitals in case of hypotrophy and to improve hydration and skin texture.

13. Composition comprising the gel according to any one of claims 5-6 for use as a medicament.

14. Composition according to claim 13 which is injectable.

## Patentansprüche

1. Verfahren zur Synthese eines monophasischen injizierbaren Gels, das aus vernetztem monobasischem Natriumhyaluronat (NaHA) und linearem, multifraktional interkaliertem Natriumhyaluronat (NaHA) gebildet wird, umfassend die folgenden Schritte:
Schritt 1 : Mischen von Natriumhyaluronat mit einer intrinsischen Viskosität zwischen 10 und 30 dl/g und einer wässrigen Lösung von Saccharoseepoxid, ausgewählt aus: Epoxy-Allyl-Saccharose (EAS) oder Epoxy-Crotyl-Saccharose (ECS) und 0,25 molarer NaOH in einem Mischer eingestellt auf 10 U/min, bei einer Temperatur zwischen 15°C und 25°C für einen Zeitraum von 10 Stunden;
Schritt 2: Ansäuern der Lösung zur Unterbrechung des Vernetzungsprozesses;
Schritt 3: Reinigungsdialyse der resultierenden Lösung, **gekennzeichnet durch** eine Konzentration an vernetztem monobasischem Natriumhyaluronat zwischen 1% und 10% und eine Osmolarität von etwa 200-400 mosm;
Schritt 4: pH-Stabilisierung mit einem pH-7,4-Puffer;
Schritt 5: Interkalation von multifraktioniertem Natriumhyaluronat unter Zugabe einer separat hergestellten gelatinösen Lösung zu der vernetzten Natriumhyaluronatlösung, die N° 5 Fraktionen Natriumhyaluronat mit einem Molekulargewicht von 1.000.000 Da, 500.000 Da, 200.000 Da, 100.000 Da und 2.000 Da enthält, in Mengen im Bereich von 1 bis 20 Gew.-% vernetztes Natriumhyaluronat (NaHA).

2. Syntheseverfahren nach Anspruch 1, bei dem das Saccharoseepoxid durch das Epoxid eines unter Maltitol und Sorbitol ausgewählten Zuckers ersetzt wird.

3. Syntheseverfahren nach den Ansprüchen 1-2, bei dem der Interkalationsprozess von linearem multifraktioniertem Natriumhyaluronat aus einem Wechsel von Schichten aus linearem multifraktionellem Natriumhyaluronat mit einer Dicke von 2 mm mit Schichten aus vernetztem Natriumhyaluronat besteht, mit einer Dicke von 4 mm in einem graduierten Gefäß.

4. Syntheseverfahren nach einem der Ansprüche 1-3, bei dem die aus dem Interkalationsprozess stammende Zubereitung:
- 12 Stunden lang bei einer Temperatur von 3°C und unter vollständiger Abwesenheit von Sauerstoff stehen gelassen wird;
- in einem Orbitalmischer gemischt wird.

5. Monophasisches injizierbares Gel, umfassend die folgenden Komponenten:
- Natriumhyaluronat (NaHa) mit einer Gesamtkonzentration im Syntheseendprodukt zwischen 1,01% und 12%, vernetzt mit Epoxyallyl-Saccharose (EAS) oder Epoxycrotylsaccharose (ECS) mit einer Gesamtkonzentration im Syntheseendprodukt zwischen 1% und 30%;
- interkaliert mit linearem multifraktioniertem Natriumhyaluronat (NaHA), das N° 5 Fraktionen Natriumhyaluronat mit einem Molekulargewicht von 1.000,00 Da, 500.000 Da, 200.000 Da, 100.000 Da bzw. 2.000 Da in Gewichtsmengen zwischen 1% und 20% aus vernetztem Natriumhyaluronat (NaHA) enthält.

6. Monophasisches injizierbares Gel nach Anspruch 5, das ein pH 7,4 aufweist.

7. Gel nach einem der Ansprüche 5-6 zur Verwendung als Arzneimittel.

8. Gel nach Anspruch 7 zur Verwendung in der Augenchirurgie als viskoelastisches Mittel.

9. Gel nach Anspruch 7 zur Verwendung als Ersatz für eine Synovialflüssigkeit bei Kreuzungen Art eines Visko-Ergänzungsmittels.

10. Gel nach einem der Ansprüche 5-6 zur Verwendung bei der Behandlung von Gesichtsfalten und Volumen in der Art eines Füllmittels für Falten und Narben eines Körpers.

11. Gel nach einem der Ansprüche 5-6 zur Verwendung in Lösungen zur Wiederherstellung oder Volumenvergrößerung von Jochbeinen, Lippen, Gesichtsvertiefungen und als Füllmittel, um Vertiefungen unterschiedlichen Ursprungs wie Narben oder Dehnungsspuren aufzufüllen oder zu vergrößern ein lokalisiertes Volumen von Nebenhöhlen oder anderen anatomischen Bereichen.

12. Gel nach einem der Ansprüche 5-6 zur Verwendung als Füllmittel zur Vergrößerung des Volumens der männlichen und weiblichen Genitalien bei Hypotrophie und zur Erhöhung der Hydratation und Struktur der Haut.

13. Zusammensetzung enthaltend das Gel nach einem der Ansprüche 5-6 zur Verwendung als Medikament.

14. Zusammensetzung nach Anspruch 13, die injizierbar ist.

## Revendications

1. Procédé de synthèse d'un gel injectable monophasique formé de hyaluronate de sodium monophasique réticulé (NaHA) et d'hyaluronate de sodium intercalé linéaire multifractionnel (NaHA) comprenant les opérations suivantes :
Etape 1 : mélange de hyaluronate de sodium de viscosité intrinsèque comprise entre 10 et 30 dl/g et d'une solution aqueuse d'époxyde de saccharose choisi parmi : époxy allyl saccharose (EAS), ou époxy crotyl saccharose (ECS) et NaOH 0,25 molaire dans un mélangeur réglée à 10 rpm, à une température comprise entre 15°C et 25°C pendant une durée de 10 heures ;
Etape 2 : acidification de la solution pour interrompre le processus de réticulation ;
Etape 3 : dialyse de purification de la solution résultante, **caractérisée par** une concentration en hyaluronate de sodium monophasique réticulé comprise entre 1% et 10% et une osmolarité d'environ 200-400 mosm;
Etape 4 : stabilisation du pH avec un tampon pH 7,4;
Etape 5 : intercalation de hyaluronate de sodium multifractionel avec addition à la solution de hyaluronate de sodium réticulé d'une solution gélatineuse préparée séparément et contenant N°5 fractions de hyaluronate de sodium de poids moléculaire respectivement 1.000.000 Da, 500.000 Da, 200.000 Da, 100.000 Da et 2.000 Da, dans des quantités allant de 1% à 20% en poids de hyaluronate de sodium réticulé (NaHA).

2. Procédé de synthèse selon la revendication 1, dans lequel l'époxyde de saccharose est remplacé par l'époxyde d'un sucre choisi parmi le maltitol et le sorbitol.

3. Procédé de synthèse selon les revendications 1-2 dans lequel le processus d'intercalation du hyaluronate de sodium linéaire multifractionnel consiste en une alternance de couches de hyaluronate de sodium linéaire multifractionnel d'une épaisseur de 2 mm avec des couches de hyaluronate de sodium réticulé avec une épaisseur de 4 mm dans un récipient gradué.

4. Procédé de synthèse selon l'une des revendications 1 à 3, dans lequel la préparation issue du processus d'intercalation:
- est laissée reposer 12 heures à une température de 3°C et dans des conditions d'absence totale d'oxygène;
- est mélangé dans un mélangeur orbital.

5. Gel injectable monophasique comprenant les composants suivants:
- hyaluronate de sodium (NaHa) avec une concentration totale dans le produit de synthèse final entre 1,01% et 12%, réticulé avec de l'époxy allyl saccharose (EAS) ou de l'époxy crotyl saccharose (ECS) avec une concentration totale dans le produit de synthèse final entre 1% et 30%;
- intercalé avec hyaluronate de sodium multifractionnel linéaire (NaHA) contenant N° 5 fractions de hyaluronate de sodium d'un poids moléculaire de 1.000.00 Da, 500.000 Da, 200.000 Da, 100.000 Da et 2.000 Da, respectivement, en quantités comprises entre 1% et 20% en poids de hyaluronate de sodium réticulé (NaHA).

6. Gel injectable monophasique selon la revendication 5, avec pH 7,4.

7. Gel selon l'une des revendications 5-6 destiné à être utilisé comme médicament.

8. Gel selon la revendication 7 destiné à être utilisé en chirurgie ophtalmique comme agent viscoélastique.

9. Gel selon la revendication 7 destiné à être utilisé comme substitut d'un liquide synovial dans les injonctions à la manière d'un agent visco-supplémentaire.

10. Gel selon l'une des revendications 5-6 pour son utilisation dans le traitement des rides et volumes du visage à la manière d'un agent de comblement des rides et sillons ou cicatrices d'un corps.

11. Gel selon l'une des revendications 5-6 pour son utilisation dans des solutions pour récupérer ou augmenter les volumes des os zygomatiques, des lèvres, des dépressions faciales et comme agent de comblement pour combler des dépressions d'origines diverses telles que des cicatrices ou des traces d'étirements ou pour augmenter un volume localisé de sinus ou d'autres zones anatomiques.

12. Gel selon l'une des revendications 5-6 destiné à être utilisé comme agent de comblement pour augmenter les volumes des organes génitaux masculins et féminins en cas d'hypotrophie et pour augmenter l'hydratation et la structure de la peau.

13. Composition comprenant le gel selon l'une des revendications 5-6 pour une utilisation comme médicament.

14. Composition selon la revendication 13 qui est injectable.
